# NEW EUROPEAN PATENT SPECIFICATION

(11) **EP 1 905 818 B2**
(45) Date of publication and mention of the opposition decision: **01.10.2014**
(45) Mention of the grant of the patent: 13.01.2010
(21) Application number: 06121393.0
(22) Date of filing: 28.09.2006
(51) Int. Cl.: C11D 17/04, C11D 3/50, B65D 77/22, B65D 5/66

(54) **Detergent Pack**
Waschmittelpackung
Emballage de détèrgente

(43) Date of publication of application: 02.04.2008
(73) Proprietor: The Procter & Gamble Company, Cincinnati, OH 45202 (US)
(72) Inventor: Koch, Piotr, 1970, Wezembeek-Oppem (BE)
(74) Representative: Pickford, James Lawrence

(56) References cited:
- EP-A- 1 396 440
- EP-A- 1 605 037
- EP-A2- 0 214 789
- WO-A-02/20361
- WO-A-03/047998
- WO-A1-03/000571
- WO-A1-2005/123895
- WO-A2-03/022703
- US-A- 5 524 990

## Description

### TECHNICAL FIELD

The present invention relates to the field of detergent products. In particular it relates to detergent products comprising a combination of a packaging container and a water-soluble cleaning pouch. The invention also relates to a method of preventing or reducing malodour in the interior of a packaging container containing a water-soluble pouch.

### BACKGROUND OF THE INVENTION

Cleaning detergent compositions are usually perfumed. Powdered cleaning products usually include perfume sprayed onto the powder. Liquid cleaning products usually include perfume dissolved/emulsified therein. In traditional products, part of the perfume is released from the composition into the headspace of the package providing a pleasant smell each time that the package is opened or at least for the first few times. Consumers associate the pleasant smell with cleaning capacity and expect to perceive perfume each time that the package is opened.

Water-soluble cleaning pouches, i.e. cleaning compositions enveloped with a water-soluble film which dissolves in use, may contain perfume. Most water-soluble film materials, such as polyvinyl alcohol films are substantially perfume-impermeable precluding or reducing the transfer of perfume from the interior of the pouch to the packaging container. Consumers tend to expect the scent of a perfume. A packaging container therefore, without perfume is unappealing and can affect the acceptance of the product.

Usually the water-soluble film material is vulnerable to moisture. In order to protect the film and the enclosed composition the pouches are stored in packaging containers which reduce transfer of moisture from the environment to the interior of the pouch and vice-versa. WO 03/047998 discloses the combination of a water-soluble capsule containing a detergent composition with a package containing the capsule. The package is formed from a material which has a moisture vapour transfer rate of between 0.25 g/m2/day to 10 g/m2/day at 38°C and 90% relative humidity.

It has also been found that water-soluble cleaning pouches may generate malodours, mainly proceeding from film material impurities derived from the manufacturing process. These malodours can accumulate in the confined headspace of the package, and are easily perceived when opening the package. This is the first moment of interaction between the consumer and the product. The acceptance of the product is to a great extent based on this moment. Consumers find malodours very unpleasant and associate them with harsh chemicals. This can adversely impact on consumer acceptance. EP 1605037 describes a detergent pack comprising a malodour generating water-soluble pouch, a packaging container and a hot melt adhesive perfume. WO02/20361 describes a package for dispensing unitized dose of laundry additive comprising a container and a closure for reducing exposure to moisture. US 6092690 describes a container for stacking moist wipes comprising a hinged lid.

Malodours could be masked with strong or high levels of perfume, however, the use of strong perfumes in cleaning product is not well accepted by consumers.

### SUMMARY OF THE INVENTION

According to the present invention there is provided a detergent pack comprising a combination of a water-soluble cleaning pouch, comprising a liquid composition and an enveloping film material, and a packaging container therefore wherein:
a) the liquid composition comprises a first perfume;
b) the packaging container comprises a hinged lid comprising a lid portion and a frame portion; and
c) the packaging container comprises an adhesive strip adhered to an internal wall thereof substantially at the opening of said container, such that the frame portion completely or partially obscures the presence of the adhesive strip the adhesive strip comprising an aldehyde-comprising perfume, and wherein the adhesive strip is a hot melt adhesive.

The pouch preferably comprises a liquid composition which in preferred embodiments comprises a perfume. The packaging container comprises an adhesive strip adhered to an internal wall thereof The adhesive strip is positioned next to, near to or at the opening of the container. The adhesive strip comprises a second perfume which may be the same or different to the first perfume. The second perfume is effective in counteracting any malodour of the cleaning pouch and filling the headspace in the packaging container with an aesthetically pleasing scent. Preferably the second perfume is an aldehyde-containing perfume.

The Applicants have found that an adhesive strip of the like described here may cause or me be perceived to cause issues. Firstly there is a possible issue regarding the safety of a perfume loaded adhesive strip in contact with the user. It is possible that such contact may cause irritation for example. Positioning the strip on an external or internal wall of the container opens the user to the possibility of coming into contact with it. Secondly, the adhesive strip protrudes from the surface. If the strip is thus applied to an internal surface of the container, there is the possibility that friction of the pouch against the strip will cause the rupture of the pouch. Thirdly, the strip is sticky. Thus the pouch may be come stuck to the strip. This again may lead to the rupture of the pouch.

The pack preferably contains at least 10 pouches and more preferably at least 12 pouches. In a preferred embodiment the enveloping film material is polyvinyl alcohol. The first time and each subsequent time that the packaging container is opened a very pleasant smell is obtained.

The adhesive strip is a strip or patch of any size or shape capable of being placed on an internal surface of the packaging container juxtapose the container opening. The strip however should be so designed as to be substantially hidden by the container lid. The adhesive strip is a hot melt adhesive strip. The hot melt adhesive strip are capable of being impregnated with a perfume and subsequentally releasing it over an extended period. By "hot melt adhesive" is understood a polymeric composition which has been melted, delivered and adhered to the packaging container on cooling. The composition is adhesive per se and does not require adhesive aids in order to adhere to the packaging container. Preferably the melting temperature of the adhesive is below the flash point of the aldehyde-comprising perfume, preferably below 100°C and more preferably below 70°C.

It has now been found that there can be a malodour, resembling a "fishy" smell, associated with pouches especially when they are packaged in a confined space. It is believed that the enveloping film material, especially when the material is polyvinyl alcohol, is mainly responsible for this malodour. The invention is therefore of particular application to detergent pouches wherein the enveloping film material is itself malodour generating. Without being bound by theory, it is believed that the malodour may be caused by amines or other impurities trapped into the film during the manufacturing process. The amines and/or other impurities are gradually released during the life of the pouch generating malodours. The malodours are especially noticeable if restricted to a confined space with small volume. It is theorised that the amines may react with the aldehydes released from the perfume creating a complex which is olfactorily pleasant. The pleasant smell is obtained not only the first time but each time that the packaging container is opened (it is expected that the packaging container will be opened as many times as the number of pouches contained, i.e., about 12 times). The adhesive strip is capable of providing sustained release of the perfume, allowing for the replenishment of the headspace after each time that the packaging container has been opened and subsequently closed.

By cleaning pouch it is understood a cleaning composition, i.e., detergent or additive composition, for use in cleaning -including laundry, manual and automatic dishwashing, etc- packed within a water-soluble film which dissolves in use, i.e., the film does not need to be removed for use of the cleaning composition. The term "pouch" as used herein includes sachets, capsules and wrapped portions. A pouch has usually a volume of from about 40 to about 10 ml, preferably from about 30 to about 20 ml. The dimensions may vary depending on the geometry of the pouch, rectangular, square pouches may have a foot print of from about 6x6 cm² to about 2x2 cm², preferably from about 4x4 cm² to about 2.5x2.5 cm² and a height of from about 0.5 to about 2 cm, preferably from about 0.8 to about 1.8 cm. Any shape of pouch is envisaged. Shapes of particular note are oval, elliptic, round, square, rectangular, pillow shaped pouches and mixtures thereof. The pouches preferably have a maximum diameter ranging from about 2 to 10 cm, more preferably 3 to 8cm. The pouches have a maximum height ranging from about 0.4 to about 7cm, more preferably from 1.5 to 5cm.

In a preferred embodiment the adhesive strip comprises, by weight thereof:
a) a copolymer of ethylene with at least another monomer comprising at least a heteroatom;
b) at least 10% of a plasticizer comprising at least one heteroatom; and
c) from about 20% to about 70%, preferably from about 30% to about 60% of aldehyde comprising-perfume.
The adhesive strip provides a uniform and sustained release of the perfume, permitting the replenishment of the headspace after each time that a pouch is dispensed.

The cleaning pouch can be a single or multi-compartment pouch. In the case of a multi-compartment pouch the liquid composition can be either a cleaning composition (i.e., containing cleaning actives such as builders, etc) or purely an aesthetic composition containing perfumes, dyes, etc.

The term "liquid" as used herein also includes gels, pastes and liquid compositions with solid suspended therein. The liquid composition comprises a first perfume. The first perfume and the aldehyde-comprising perfume can be the same, but preferably they are different. The film material is usually substantially impermeable to perfume. The perfume contained in the liquid composition will mainly be released in use. No or negligible perfume benefits would be derived from the liquid composition during storage and handling. The pack of the invention provides a pleasant smell when the packaging container is opened, as well as when the pouch is used. This execution permits the delivery of two similar or different perfumes, one during handling and one during use, providing a more complete and pleasant experience for the consumer. Usually the perfume experience expected during the handling and dispensing of the pouch is different to that expected in use, different perfume characters and intensity are required. The present execution allows for optimization at the two moments, without needing a compromise. The present execution also allows the perfume of the liquid composition to remain intact until the composition is released in use.

In a preferred multi-compartment embodiment, the pouch additionally comprises a powder composition which may also comprise a perfume. Pouches containing gas generating ingredients, as for example, bleach, may have a gas release means, for example a pin hole, to release gases formed during storage. The gas release means could also release a small amount of perfume and/or malodour. Although pouches having gas release means could release some perfume the amount released does not seem to be sufficient to overcome the malodour problem resulting from the film. If the level of perfume in the powder composition were increased this would generate an overpowering effect when in use and leave a residual smell on the tableware, which may not be acceptable. The perfume released from the adhesive strip may also counteract malodours coming from the powder composition through the pin hole.

In a preferred embodiment the packaging container is a tub. Preferably a transparent tub, preferably made from suitable plastic. Preferably the hinged lid as a whole, the lid portion or the frame portion is opaque. More preferably the hinged lid as a whole, the lid portion or the frame portion is coloured. Most preferably the hinged lid, lid and frame, are both opaque and coloured.

According to another aspect of the present invention there is provided a method of preventing or reducing malodour in the interior of a packaging container containing a malodour-generating water-soluble pouch, comprising a cleaning composition and an enveloping film material, by providing the packaging container with an adhesive strip adhered to an internal wall thereof near to, next to or at the opening of the container. The adhesive strip comprises an aldehyde-comprising perfume.

In a preferred embodiment the enveloping film material is polyvinyl alcohol. The method is suitable for packaging containers containing any type of malodour generating pouches. Although it is believed that the malodour is mainly due to the film material, this method seems to be capable of coping with other malodours which may be coming from the cleaning composition. In a preferred embodiment, the method of the invention is performed on a detergent pack containing dual compartment pouches, having a powder compartment and liquid compartment.

### DETAILED DESCRIPTION OF THE INVENTION

The present invention envisages a detergent pack comprising a packaging container for containing and dispensing a water-soluble cleaning pouch. The packaging container has a perfume-comprising adhesive strip adhered to an interior wall. The strip slowly releases perfume, providing a pleasant smell each time that the packaging container is opened. Preferred embodiments provide a pleasant smell each time that the pack is handled (even before it is opened). The cleaning composition also comprises perfume that is released in use. The present invention also envisages a method of preventing or reducing malodour in the interior of a packaging container containing pouches by providing the packaging container with an adhesive strip comprising an aldehyde-comprising perfume.

Water-soluble cleaning pouches are well known in the art. For example EP1126070, WO0183661, WO0212432 and WO03045813 describe water-soluble cleaning pouches.

Suitable pouch materials for use herein are described in page 22, line 20 to page 24 line 8 of WO 02/42408.

Preferred pouch materials include PVA (polyvinyl alcohol) films known under the trade reference Monosol M8630, as sold by Chris-Craft Industrial Products of Gary, Indiana, US, and PVA films of corresponding solubility and deformability characteristics. Other films suitable for use herein include films known under the trade reference PT film or the K-series of films supplied by Aicello, or VF-HP film supplied by Kuraray.

### Packaging container

The packaging container can be a tub, tray, jar, bottle, bag, box, etc. The packaging container is reclosable by way of a hinged lid. The packaging container preferably has a moisture vapour transfer rate of less than 0.25 g/m2/day at 38°C and 90% relative humidity.

The packaging container comprises at least one, preferably only one opening through which product may be retrieved from the container. Said opening is re-closable with a hinged lid. The hinged lid is a separate piece which is applied and fits on to the container opening. The hinged lid is designed specifically for the container such that the seal between the two is tight. It comprises a lid portion and a frame portion joined to the lid portion at a hinge. The two portions are specifically designed to connect with one another to form a tight seal. Preferably the hinged lid comprises a tamper proof system such as that described in WO03/022703. The frame is specifically designed to fit onto the opening of the container. The adhesive strip is applied to an internal wall of the container near to, next to or at the opening of the container. The frame portion will thus completely or partially obscure the presence of the adhesive strip. Thus the adhesive strip is either at least partially hidden from view or contact by the user or is positioned such that accidental contact or viewing is not generally possible without express intent. More preferably the adhesive strip is applied to an internal wall of the container within at least 1 cm of the edge of the opening, more preferably within 0.75cm and most preferably within at least 0.5cm from the edge of the opening of the container.

### First perfume composition

The level of perfume in the liquid composition may range from about 0.001 to about 10%, preferably from about 0.05 to about 5% and more preferably from about 0.01 to about 1.5% by weight of the liquid composition.

### Aldehyde-comprising perfumes

Suitable aldehydes for use herein are those traditionally used in perfumes and can be found in "Perfume and Flavor Chemicals", Vol. I and II, S. Arctander, Allured Publishing, 1994, ISBN 0-931710-35-5. Suitable aldehydes include C6-C14 aliphatic aldehydes, C6-C14 acyclic terpene aldehyde and mixtures thereof. Preferably, the perfume component of the present invention is selected from C8-C12 aliphatic aldehydes, C8-C12 acyclic terpene aldehydes and mixtures thereof Most preferably, the perfume component of the present invention is selected from the group consisting of citral; neral; iso-citral; dihydro citral; citronellal; octanal; nonanal; decanal; undecanal; dodecanal; tridecanal; 2-methyl decanal; methyl nonyl acetaldehyde; 2-nonen al; decanal; undecenal; undecylenic aldehyde; 2, 6 dimethyl octanal; 2, 6, 3, 10, trimethyl undecen-1-al; trimethyl undecanal; dodecenal; melonal; 2-methyl octanal; 3, 5, 5, trimethyl hexanal and mixtures thereof Preferably, the perfumes for use in the hot melt comprise at least 1% of aldehydes, more preferably at least 2% and especially at least 4% by weight of the perfume composition.

Preferably, the perfume included in the adhesive strip has a citrus character, i.e., a smell having a resemblance to lemon, orange, lime, grapefruit, etc. Citrus perfumes are associated with freshness and cleanness and are the preferred perfumes to use in some cleaning products, as for example dishwashing detergents.

### Adhesive strip

The amount of adhesive strip placed on the interior of the packaging container depends on the size, specially the amount of headspace, thereof and the number and size of pouches contained therein. For example, a packaging container containing 10 polyvinyl alcohol pouches of a volume of about 50 ml wherein the pouches occupy more than 40%, preferably more than 60% and more preferably more than 70% of the interior volume of the packaging container, would require from about 0.05 to about 0.3 grams of hot melt adhesive, the hot melt comprising between 40% to 60% of aldehyde comprising-perfume, preferably from about 0.1 to about 0.2 grams.

The first essential component of the preferred hot melt adhesive strip for use herein is a copolymer of ethylene with at least another monomer comprising at least a heteroatom. All copolymers of ethylene with at least another monomer comprising at least a heteroatom are suitable for use herein.

The term "monomer comprising at least a heteroatom" includes all those monomers which comprise at least a C-X linkage wherein X is not C or H. Said C-X linkage is preferably a polar linkage. Preferably the carbon atom is linked to an N, S, F, Cl or O atom. More preferably said polar linkage is part of a carbonyl group and, more preferably, of an ester group. Preferred monomers comprising at least a heteroatom for the present invention are vinyl acetate, vinyl alcohol, methyl acrylate, ethyl acrylate, butyl acrylate, acrylic acid and salts formed therefrom, methacrylic acid and salts formed therefrom, maleic anhydride, glycidyl methacrylate and carbon monoxide.

Suitable copolymers for use herein can be both block and non-block copolymers, grafted copolymers, copolymers with side chains, or crosslinked and copolymers where ethylene monomers are randomly copolymerized with monomers comprising at least a heteroatom.

Preferred copolymers of ethylene include ethylene-vinyl ester copolymers, ethylene-acrylic ester copolymers, ethylene-methacrylic ester copolymers, ionomers, ethylene-acrylic acid copolymers, ethylene-methacrylic acid copolymers, ethylene-vinyl ester-acrylic acid copolymers, ethylene-vinyl ester-methacrylic acid copolymers, ethylene-vinyl ester-maleic anhydride copolymers, ethylene-acrylic ester-maleic anhydride copolymers, ethylene-vinyl ester-glycidyl methacrylate copolymers, ethylene-acrylic ester-glycidyl methacrylate copolymers, ethylene-maleic anhydride copolymers, ethylene-glycidyl methacrylate copolymers and mixtures thereof.

The monomer comprising at least a heteroatom in the copolymers suitable for the present invention represents from 10% to 90% of the total weight of the copolymer, preferably at least 14%, more preferably at least 18%.

Particularly preferred copolymers include ethylene-vinyl acetate copolymers such as those sold under the trade names Elvax™ by Dupont, Evathane^{™} by Atofina, Escorene™ by Exxon and Levapren™ and Levamelt^{™} by Bayer and ethylene-acrylic ester copolymers such as those sold under the trade name Lotryl^{™} by Atofina.

The second essential component of the preferred hot melt adhesive for use herein is a plasticizer or mixture of plasticizers comprising at least one heteroatom, compatible with the copolymer of ethylene with at least another monomer comprising at least a heteroatom. The term "plasticizer comprising at least a heteroatom" includes all those plasticizers which comprise at least a C-X linkage in the molecule wherein X is not C or H. Said C-X linkage is preferably a polar linkage. Preferably the carbon atom is linked to an N, S, F, Cl or O atom.

More preferably said polar linkage is part of a carbonyl group and, more preferably, of an ester group.

Suitable plasticizers for use herein include citric acid esters, low molecular weight polyesters, polyethers, liquid rosin esters, aromatic sulfonamides, phthalates, benzoates, sucrose esters, derivatives of polyfunctional alcohols (where polyfunctional means having 2 or more hydroxyl groups), adipates, tartrates, sebacates, esters of phosphoric acid, fatty acids and diacids, fatty alcohols and diols, epoxidized vegetable oils etc and mixtyres thereof. As already mentioned above, the different polarity of the different compatible plasticisers (measurable with any method known to those skilled in the art, for example water/octanol partition coefficient) can be used to tune the polarity of the polymeric matrix in order to provide a better match with the polarity of the volatile material.

Preferably the hot melt adhesive composition comprises from 5% to 75%, more preferably from 10% to 50% by weight of the composition, of the copolymer of ethylene with at least another monomer comprising at least a heteroatom; from 10% to 60%, preferably from 15% to 40% by weight of the composition, of the compatible plasticizer or blend of plasticizers comprising at least one heteroatom, and more than 20%, preferably more than 30%, more preferably more than 40% of a perfume; the volatile material is preferably comprised up to a maximum percentage of 80% by weight of the composition.

The polymeric hot melt adhesive may, in addition, comprise additional optional components to further improve the processability of the compositions and also the mechanical characteristics as well as other characteristics as tackiness, resistance to ageing by light, oxygen and heat, visual appearance etc., of the objects formed from such polymeric compositions.

Such optional components may include other copolymers that can be included in the formulations to improve their properties for example to increase adhesion or compatibility with substrates. To this purpose preferred optional copolymers are copolymers of styrene and at least one other vinyl or acrylic monomer, copolymers of poly(vinyl alcohol), polyamides, polyether amide copolymers, polyester amide copolymers, polyesters, polyether ester copolymers, polyurethanes, polyethers, poly(2-ethyl-2-oxazoline), copolymers of poly(vinyl pyrrolidone), polyacrylates, copolymers of polyvinyl ethers), etc.

The techniques for obtaining aqueous emulsions or dispersions of polymers are well known to the skilled man. For example, the selected polymer, plasticiser and perfume can be blended together as a thermoplastic material. The resulting melt can then be dispersed in water, preferably at a temperature above its melting point, by mixing. Surfactant and/or stabilizing systems known to those skilled in the art can be employed to stabilize the resultant emulsion or dispersion.

Alternatively, a preformed aqueous polymeric dispersion or emulsion can be blended with the selected plasticiser and perfume. This can be done by adding the ingredients directly to the polymeric dispersion or emulsion, or e.g. by forming an aqueous dispersion of the perfume and plasticiser and blending this with the polymeric dispersion or emulsion. Both procedures result in the formation of an aqueous dispersion of a polymeric composition according to the present invention.

Alternatively, the polymeric dispersion can be formed in the presence of the plasticiser and/or of the perfume. This process can involve the solution or dispersion of monomers or prepolymers in water containing the dispersed volatile material and/or plasticiser. The polymerization can then be initiated to form the polymeric dispersion. If required, the perfume or plasticiser can be added subsequently to produce a dispersed polymeric composition.

The hot melt adhesive compositions for use herein, due to their rheology and to their adhesion properties, are particularly useful to be applied in the molten state onto a selected substrate, and directly adhered thereto. For example they can be readily applied to the inner surface of a container. Such application can be easily achieved during the manufacturing of the container. The polymeric composition can be applied by means of a conventional hot melt delivery system. This system typically includes a melting unit, which maintains the hot melt at the temperature required to have a processable viscosity. The melting unit typically contains a pumping system capable of pumping the hot melt through a length of hose until it reaches the glue gun, or nozzle. The nozzle can have different geometries according to the desired application form of the glue (coatings, stripes, beads etc). In a typical embodiment, a slot nozzle can be used as the glue gun.

All the documents mentioned herein are incorporated by reference.

### Examples:

### Abbreviations used in Examples

In the following examples all levels are quoted as per cent (%) by weight.

### Pouch

Composition, filling, size etc to be added here.

| | | **A %** | **B %** | **C %** |
|---|---|---|---|---|
| **Surfactants** | | | | |
| | HLAS | 25.323 | 22.565 | 23.918 |
| | Nonionic C24-E07 | 17.094 | 18.047 | 20.173 |
| | Nonionic C12-15 EP7 | | | |

| **Builders** | | | | |
|---|---|---|---|---|
| | Fatty acid C12-14TPK | 13.639 | 14.25 | 14.602 |
| | Citric acid | 0.501 | 0.5 | 0.503 |

| **Boosters** | | | | |
|---|---|---|---|---|
| | PE20 | 1.002 | 1.000 | 1.007 |
| | HEDP | 1.002 | 1.0 | 1.007 |
| | Brightener 49 | 0.213 | - | 0.213 |

| **Enzymes/Stabilizers** | | | | |
|---|---|---|---|---|
| | Protease 40mg/g | 1.298 | 1.295 | - |
| | Amylase 29.26mg/g | 0.156 | 0.156 | - |
| | Carbohydrase 25mg/g | 0.129 | 0.129 | - |

| **Stabilizers** | | | | |
|---|---|---|---|---|
| | Propane Diol | 9.582 | 10.372 | 10.926 |
| | Glycerol | 5.012 | 5.0 | 5.033 |
| | Water (free) | 1.504 | 1.5 | 1.51 |
| | MEA | 9.524 | 9.5 | 9.563 |
| | MgCL2 | 0.2 | 0.2 | 0.201 |
| | K Sulphite | 0.17 | 0.17 | 0.171 |
| | Thickener | 0.14 | 0.14 | 0.14 |

| **Miscellaneous/Aesthetics** | | | | |
|---|---|---|---|---|
| | Perfume | 1.59 | 1.59 | 1.02 |
| | Dye (Acid Blue 1) | 6 ppm | 5 | 6 ppm |
| | Preservative GDA | 5.3 ppm | ∼ 5.3 ppm | ∼ 5.3 ppm |
| | Preservative Proxel | ∼ 3.5 ppm | ∼ 3.5 ppm | ∼ 3.5 ppm |
| | Total Water content | ∼ 9.2 | ∼ 9.1 | ∼ 8.4 |
| Dosage (mls) | | 44.5 | 44.5 | 44.5 |
| Specific gravity (g/cc) | | 1.050 | 1.050 | 1.050 |
| HLAS: linear alkyl benzene sulphonic acid | | | | |
| PE20: poly(ethylene imine) ethoxylated PE1600 E20 | | | | |
| Brightener 49: disodium 4,4'-bis-(2-sulfostyryl) biphenyl from Ciba Geigy Tradename Tinopal CBS | | | | |
| Thickener: 4% hydrogenated castor oil, 16% HLAS, 0.10% STPP, 3.65% NaOH, water to 100% | | | | |

### Aldehyde-comprising perfume

Tables 2 and 3 exemplify aldehyde-comprising perfume compositions which form part of the hot melt adhesive. Aldehydes are highlighted in bold. Perfume A has a lemon connotation. Perfume B has a fresh lily of the valley connotation.

| Ingredient | % |
|---|---|
| Orange phase oil | 50 |
| **Hydroxycitronellal** | **10** |
| **Citral** | **5.0** |
| Geraniol | 3.5 |

**Table 2: Perfume A**

| | |
|---|---|
| Citronellol | 3.0 |
| Linalool | 1.0 |
| Methyl Dihydro Jasmonate | 10 |
| **Ligustral** | **0.75** |
| **Lilial** | **9.0** |
| **Undecyl Aldehyde** | **0.75** |
| **Decyl Aldehyde** | **6.0** |

**Table 3: Perfume B**

| Ingredient | % |
|---|---|
| Benzyl Acetate | 6.0 |
| Citronellol | 12.0 |
| **Hydroxycitronellal** | **15.0** |
| **Citronellal** | **0.5** |
| **Lyral** | **8.0** |
| **Hexyl Cinnamic Aldehyde** | **15.0** |
| **Lilial** | **10.0** |
| Indol | 0.5 |
| **Liminal** | **1.0** |
| Linalool | 10.0 |
| Methyl Dihydro Jasmonate | 10.0 |
| Phenyl Ethyl Alcohol | 10.0 |
| **Ligustral** | **2.0** |

### Hot melt adhesive

### Composition A

24.75 parts of Elvax® 250, a poly(ethylene-*co*-vinyl acetate) with a vinyl acetate content of 28 wt% and a melt flow index of 25 dg/min (ASTM D1238), available from Dupont, 9.75 parts of Escorene Ultra MV 02528, a poly(ethylene-*co*-vinyl acetate) with a vinyl acetate content of 27.5 wt% and a melt viscosity at 190 °C of 3100 cps (ExxonMobil method), available from ExxonMobil Chemical, 15 parts of ForalynTM 5020F, a rosin ester plasticiser available from Eastman Chemical and 0.5 parts of IrganoxTM B225, an antioxidant available from Ciba Geigy (Switzerland) were added to a sigma blade mixer and heated to a temperature of about 10-20 °C above the melting point of the polymers (about 120 °C). The ingredients were mixed until a homogeneous mass was obtained. The temperature was then reduced to a point where the mixture was still molten, typically to about 10-20 °C above the melting point of the mixture (about 80 °C in the present case). 50 parts of perfume (Composition A or B, Table 2 or 3) was added to the plasticised polymer mixture. The ingredients were mixed until a homogeneous mixture was obtained.

### Composition B

39.5 parts of Escorene Ultra MV 02528, a poly(ethylene-co-vinyl acetate) with a vinyl acetate content of 27.5% and a melt viscosity at 190 °C of 3100 cps (ExxonMobil method), available from ExxonMobil Chemical, 30 parts of ForalynTM 5020F, a rosin ester plasticiser available from Eastman Chemical and 0.5 parts of IrganoxTM B225, an antioxidant available from Ciba Geigy (Switzerland) were added to a sigma blade mixer and heated to a temperature of about 10-20°C above the melting point of the polymer (about 80 °C). The ingredients were mixed until a homogeneous mass was obtained. The temperature was then reduced to a point where the mixture was still molten, typically to about 10-20 °C above the melting point of the mixture (about 60 °C in the present case). 30 parts of perfume (Composition A or B, Table 2 or 3) was added to the plasticised polymer mixture. The ingredients were mixed until a homogeneous mixture was obtained.

## Claims

1. A detergent pack comprising a combination of a water-soluble cleaning pouch, comprising a liquid composition and an enveloping film material, and a packaging container therefore wherein:
a) the liquid composition comprises a first perfume;
b) the packaging container comprises a hinged lid comprising a lid portion and a frame portion; and
c) the packaging container comprises an adhesive strip adhered to an internal wall thereof substantially at the opening of said container such that the frame portion completely or partially obscures the presence of the adhesive strip, the adhesive strip comprising an aldehyde-comprising perfume and wherein the adhesive strip is a hot melt adhesive.

2. The detergent pack according to claim 1 wherein the enveloping film material is polyvinyl alcohol.

3. The detergent pack according to claim 1 wherein the hot melt adhesive comprises:
d) a copolymer of ethylene with at least another monomer comprising at least a heteroatom;
e) at least 10% of a plasticizer comprising at least one heteroatom; and
f) from about 20% to about 70% of aldehyde comprising-perfume.

4. The detergent pack according to any of claim 1 to 2 wherein the water-soluble pouch is a multi-compartment pouch.

5. The detergent pack according to any of claim 1 to 3 wherein the water-soluble pouch is a multi-compartment pouch comprising a powder compartment.

6. The detergent pack according to any of claim 1 to 4 wherein the water-soluble detergent-pouch is a dishwashing or laundry washing pouch.

7. The detergent pack according to any of claim 1 to 5 wherein the packaging container is a transparent plastic tub.

8. The detergent pack according to claim 6 wherein the lid portion or frame portion of the packaging container is opaque, preferably coloured.

9. A method of preventing or reducing malodour in the interior of a packaging container containing a malodour-generating water-soluble pouch, comprising a cleaning composition and an enveloping film material, by providing the packaging container of the preceding claims with a hot melt adhesive adhered to an internal wall thereof substantially at the opening of said contain such that the frame portion completely or partially obscures the presence of the adhesive strip, the hot melt adhesive comprising an aldehyde-comprising perfume.

10. A method according to claim 9 wherein the enveloping film material is polyvinyl alcohol.

11. A method according to claim 9 or 10 wherein the water-soluble pouch is a dual-compartment pouch having a powder compartment and a liquid compartment.

## Patentansprüche

1. Waschmittelpackung, umfassend eine Kombination eines wasserlöslichen Reinigungsbeutels, der eine flüssige Zusammensetzung und ein umhüllendes Folienmaterial umfasst, und einen Verpackungsbehälter dafür, wobei:
a) die flüssige Zusammensetzung einen ersten Duftstoff umfasst;
b) der Verpackungsbehälter einen Klappdeckel umfasst, der einen Deckelabschnitt und einen Rahmenabschnitt umfasst; und
c) der Verpackungsbehälter einen Klebestreifen umfasst, der an eine innere Wand davon im Wesentlichen an der Öffnung des Behälters derart geklebt ist, dass der Rahmenabschnitt die Gegenwart des Klebestreifens vollständig oder teilweise verdeckt, wobei der Klebestreifen einen Aldehyd umfassenden Duftstoff umfasst und wobei der Klebestreifen ein Heißschmelzkleber ist.

2. Waschmittelpackung nach Anspruch 1, wobei das umhüllende Folienmaterial Polyvinylalkohol ist.

3. Waschmittelpackung nach Anspruch 1, wobei der Heißschmelzkleber Folgendes umfasst:
d) ein Copolymer von Ethylen mit mindestens einem anderen Monomer, das mindestens ein Heteroatom umfasst;
e) zu mindestens 10 % einen Weichmacher, der mindestens ein Heteroatom umfasst; und
f) zu etwa 20 % bis etwa 70 % einen Aldehyd umfassenden Duftstoff.

4. Waschmittelpackung nach einem der Ansprüche 1 bis 2, wobei der wasserlösliche Beutel ein Mehrkammerbeutel ist.

5. Waschmittelpackung nach einem der Ansprüche 1 bis 3, wobei der wasserlösliche Beutel ein Mehrkammerbeutel ist, der eine Pulverkammer umfasst.

6. Waschmittelpackung nach einem der Ansprüche 1 bis 4, wobei der wasserlösliche Waschmittelbeutel ein Geschirrspül- oder Wäschewaschbeutel ist.

7. Waschmittelpackung nach einem der Ansprüche 1 bis 5, wobei der Verpackungsbehälter ein durchsichtiger Kunststoffbecher ist.

8. Waschmittelpackung nach Anspruch 6, wobei der Deckelabschnitt oder Rahmenabschnitt des Verpackungsbehälters undurchsichtig, vorzugsweise farbig ist.

9. Verfahren zum Verhindern oder Verringern von schlechtem Geruch im Inneren eines Verpackungsbehälters, der einen schlechten Geruch erzeugenden, wasserlöslichen Beutel enthält, der eine Reinigungszusammensetzung und ein umhüllendes Folienmaterial umfasst, durch Bereitstellen des Verpackungsbehälters nach den vorhergehenden Ansprüchen mit einem Heißschmelzkleber, der an eine Innenwand davon im Wesentlichen an der Öffnung des Behälters derart geklebt ist, dass der Rahmenabschnitt die Gegenwart des Klebestreifens vollständig oder teilweise verdeckt, wobei der Heißschmelzkleber einen Aldehyd umfassenden Duftstoff umfasst.

10. Verfahren nach Anspruch 9, wobei das umhüllende Folienmaterial Polyvinylalkohol ist.

11. Verfahren nach Anspruch 9 oder 10, wobei der wasserlösliche Beutel ein Zweikammerbeutel mit einer Pulverkammer und einer Flüssigkeitskammer ist.

## Revendications

1. Emballage de détergent comprenant une combinaison d'un sachet de nettoyage hydrosoluble, comprenant une composition liquide et un matériau de film d'enveloppe, et un récipient de conditionnement à cet effet, dans lequel :
a) la composition liquide comprend un premier parfum ;
b) le récipient de conditionnement comprend un couvercle articulé comprenant une partie de couvercle et une partie de cadre ; et
c) le récipient de conditionnement comprend une bande adhésive collée sur une paroi interne de celui-ci essentiellement au niveau de l'ouverture dudit récipient, de telle sorte que la partie de cadre masque complètement ou partiellement la présence de la bande adhésive, la bande adhésive comprenant un parfum comprenant un aldéhyde, et dans lequel la bande adhésive est un adhésif thermofusible.

2. Emballage de détergent selon la revendication 1, dans lequel le matériau de film d'enveloppe est un alcool polyvinylique.

3. Emballage de détergent selon la revendication 1, dans lequel l'adhésif thermofusible comprend :
d) un copolymère d'éthylène avec au moins un autre monomère comprenant au moins un hétéroatome ;
e) au moins 10 % d'un plastifiant comprenant au moins un hétéroatome ; et
f) d'environ 20 % à environ 70 % d'un parfum comprenant un aldéhyde.

4. Emballage de détergent selon l'une quelconque des revendications 1 à 2, dans lequel le sachet hydrosoluble est un sachet à compartiments multiples.

5. Emballage de détergent selon l'une quelconque des revendications 1 à 3, dans lequel le sachet hydrosoluble est un sachet à compartiments multiples comprenant un compartiment pour de la poudre.

6. Emballage de détergent selon l'une quelconque des revendications 1 à 4, dans lequel le sachet de détergent hydrosoluble est un sachet de lavage de la vaisselle ou de lavage du linge.

7. Emballage de détergent selon l'une quelconque des revendications 1 à 5, dans lequel le récipient de conditionnement est un ravier en plastique transparent.

8. Emballage de détergent selon la revendication 6, dans lequel la partie de couvercle ou la partie de cadre du récipient de conditionnement est opaque, de préférence colorée.

9. Procédé pour prévenir ou pour réduire les mauvaises odeurs à l'intérieur d'un récipient de conditionnement contenant un sachet hydrosoluble générant une mauvaise odeur, comprenant une composition de nettoyage et un matériau de film d'enveloppe, en réalisant le récipient de conditionnement selon les revendications précédentes avec un adhésif thermofusible collé sur une paroi interne de celui-ci essentiellement au niveau de l'ouverture dudit récipient de telle sorte que la partie de cadre masque complètement ou partiellement la présence de la bande adhésive, l'adhésif thermofusible comprenant un parfum comprenant un aldéhyde.

10. Procédé selon la revendication 9, dans lequel le matériau de film d'enveloppe est un alcool polyvinylique.

11. Procédé selon la revendication 9 ou 10, dans lequel le sachet hydrosoluble est un sachet à deux compartiments ayant un compartiment pour de la poudre et un compartiment pour un liquide.
